Europäisches Patentamt

(19) European Patent Office

Office européen des brevets

(11) EP 0 901 888 A1

## (12) EUROPEAN PATENT APPLICATION
published in accordance with Art. 158(3) EPC

(43) Date of publication:
17.03.1999 Bulletin 1999/11

(21) Application number: 98900166.4

(22) Date of filing: 07.01.1998

(51) Int. Cl.⁶: B25J 19/00

(86) International application number:
PCT/JP98/00019

(87) International publication number:
WO 98/30368 (16.07.1998 Gazette 1998/28)

(84) Designated Contracting States:
DE

(30) Priority: 07.01.1997 JP 11907/97

(71) Applicant: FANUC LTD
Minamitsuru-gun, Yamanashi 401-05 (JP)

(72) Inventors:
• NIHEI, Ryo
Fujiyoshida-shi, Yamanashi 403 (JP)
• OKADA, Takeshi,
Room 10-306, Fanuc Manshonharimomi
Minamitsuru-gun, Yamanashi 401-05 (JP)

• KUREBAYASHI, Hidenori,
Room 14-304,
Fanuc
Minamitsuru-gun, Yamanashi 401-05 (JP)

(74) Representative:
Billington, Lawrence Emlyn et al
Haseltine Lake & Co.,
Imperial House,
15-19 Kingsway
London WC2B 6UD (GB)

## (54) ROTARY BALANCER AND ROBOT WITH THE ROTARY BALANCER

(57) A rotary balancer capable of being incorporated into a rotary axis mechanism of a robot and preventing an arm from being deflected by an action of a balancing force. When a first arm turns from a posture in which the minimum gravitational load is exerted, a shaft (14) and a vane (15) of a rotary balancer BL1 incorporated into a first arm rotary mechanism are turned in the directions B and B' and are changed from the neutral state to the balancing force output state. A pressure difference (P1 > P2) is made between gastight regions C1 and C2 formed by dividing a cylinder (10) by a block (12) and the vane (12) and is transduced into torque T. The torque T is transmitted to the rotary axis of the first arm so as to reduce a load on a motor for driving the rotary axis of the first arm. Seals (13, 16) become unnecessary when a gas bag is used for forming a gastight region. The body of a fluid pressure actuator is utilized as the components of the rotary balancer BL1.

FIG.3a

FIG.3b

## Description

Technical Field

The present invention relates to a rotary balancer to be incorporated into a industrial robot and a robot equipped with a rotary balancer, and more particularly to a rotary balancer utilizing fluid pressure and a robot equipped with such a rotary balancer.

Background Art

When an industrial robot takes a posture with its arm laterally stretched, a heavy gravitational load is exerted on a motor for driving a horizontal rotary axis (i.e., a axis extending in a horizontal direction) of the arm. A balancer is used as means for reducing such a load. It is necessary that the balancer to be incorporated in the robot is provided with means for producing torque (i.e., balancing force) for neutralizing the gravitational load increasing depending on a change of posture.

The balancer utilizes a coil spring which expands and contracts in response to turning of the arm, or an air cylinder having a piston which slides in response to turning of the arm, as means for producing the balancing force to neutralize the gravitational load. However, the balancer of either type has no mechanism for directly producing balancing force in the form of torque resisting the gravitational load. That is, since the balancer of the prior art indirectly produces torque by means of fluid pressure or elastic force of the spring acting on the robot arm, the robot arm may deflect to cause an undesirable influence on a control accuracy of a tip of hand (i.e., a tool point) of the robot.

Further, it is difficult to incorporate a coil spring mechanism or an air cylinder/piston mechanism into a robot mechanical unit due to characteristics of the mechanism and it is not advantageous in making an external shape compact in the periphery of a rotary axis portion of the robot.

Disclosure of Invention

It is an object of the present invention to provide a rotary balancer having a simple structure suitable to be incorporated into a robot mechanism, and capable of producing a balancing force without deflecting a robot arm, and to provide a robot with the rotary balancer incorporated into a rotary axis mechanism. The present invention also arms to compact a external shape of a rotary axis portion of the robot, to reduce a cost and to prevent control accuracy from being lowered due to a deflection of the robot arm through the above arrangements.

Further, the present invention proposes a structure of a rotary balancer capable of utilizing a simply modified body of a fluid pressure rotary actuator as principal components of the rotary balancer so as to simply provide a balancer for a robot at lower cost.

The present invention provides a rotary balancer capable of producing a balancing force directly in the form of torque so as to neutralize a gravitational load using a fluid pressure such as air pressure, and the rotary balancer is incorporated into a rotary axis mechanism of the robot.

A rotary balancer of the present invention comprises: a cylinder; a shaft rotatably disposed along an axis of the cylinder; at least one stationary partition member fixed to an inner surface of the cylinder so as to occupy a part of a space formed between an inner surface of the cylinder and an outer surface of the shaft; at least one movable partition member fixed to the shaft to rotate therewith as a unit so as to occupy a part of the space between the inner surface of the cylinder and the outer surface of the shaft; and closing members for closing the opposite end openings of the cylinder.

The space around the shaft in the cylinder is divided into at least two regions by the stationary partition member, the movable partition member and the closing members, and a sealed space is formed in each region.

The stationary partition member may be provided with a seal member for sealing a gap between the stationary partition member and the shaft, and the movable partition member may be provided with a seal member for sealing a gap between the movable partition member and the cylinder, to thereby from the sealed space in each partitioned region.

Otherwise, a bag charged with gas may be provided in each partitioned region in the cylinder, to thereby form the sealed space in each partitioned region. Adopting this method, the sealed regions are easily formed.

A fluid pressure actuator may be utilized as a rotary balancer by closing air intake/exhaust ports of the fluid pressure actuator, thereby components of the fluid pressure actuator may be used as the cylinder, the shaft, the stationary partition member, the movable partition member and the closing members. Such utilization of the fluid pressure actuator as the rotary balancer is advantageous in reducing a manufacturing cost of the balancer.

The rotary balancer described above may be incorporated into a rotary axis mechanism for driving a robot arm. The robot arm is disposed between a driving source of the rotary axis mechanism and the rotary balancer, and the shaft of the rotary balancer is connected to the robot arm so as to be rotated in response to turning of the robot arm. Alternatively, the rotary balancer is disposed between the robot arm and the driving source so as to transmit a driving force from the driving source to the robot arm through the rotary balancer.

Using either way of incorporation, the driving source (including a reduction gear) of the rotary axis mechanism, the turning axis of the robot arm and the rotary balancer may be arranged coaxially with ease, and it is advantageous in compacting an external shape of the robot. Further, since the balancing force acts on the robot arm without deforming the robot arm, it is advantageous in maintaining control accuracy of the robot.

Brief Description of Drawings

FIG. 1a is a front view showing a robot incorporating a rotary balancer of the present invention, FIG. 1b is a right side view of the robot;
FIG. 2 is an exploded view showing a basic structure of a rotary balancer with one vane according to a first embodiment of the invention;
FIG. 3a is a schematic view showing a neutral state of the rotary balancer shown in FIG. 2, FIG. 3b is a schematic view showing a state in which a balancing force is outputted;
FIG. 4 is a partially cutaway sectional view showing a structure in which the rotary balancer shown in FIG. 2 is incorporated into a second axis mechanism of the robot shown in FIG. 1;
FIG. 5 is a exploded view showing a basic structure of a rotary balancer according to a second embodiment of the invention;
FIG. 6 is a partially cutaway sectional view showing a structure in which the rotary balancer shown in FIG. 5 is incorporated into the second axis mechanism of the robot shown in FIG. 1;
FIG. 7a is a schematic view showing a neutral state of a rotary balancer with two movable partition members and two stationary partition members according to a third embodiment of the invention, FIG. 7b is a schematic view showing a state in which a balancing force is outputted;
FIG. 8a is a schematic view showing a neutral state of a rotary balancer with a gas bag according to a fourth embodiment of the invention, FIG. 8b is a schematic view showing a state in which a balancing force is outputted; and
FIG. 9 illustrates a fifth embodiment of the invention, in which an existing rotary fluid pressure actuator is utilized as a rotary balancer which is equivalent in function to the rotary balancer shown in FIG. 2.

Best Mode of Carrying out the Invention

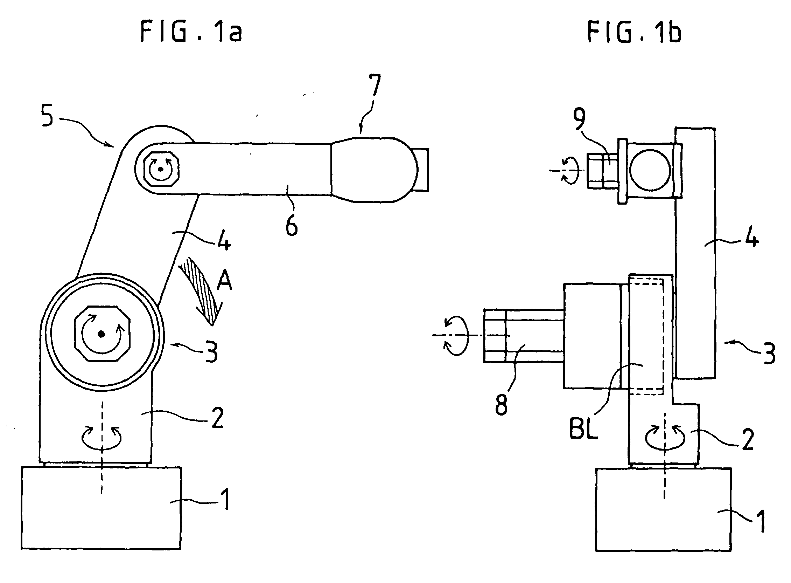

FIGS. 1a and 1b show a general structure of a robot to be equipped with a rotary balancer according to later-described embodiments of the present invention and a portion into which the rotary balancer is incorporated. A second axis mounting base 2 serving as a swivel body of a first axis is mounted on an installation base 1. A second axis mechanism 3 for turning a first arm 4 is mounted on the second axis mounting base 2.

A third axis mechanism 5 for turning a second arm 6 is provided on an end of the first arm 4, and a wrist 7 with an appropriate number of axes (three axes in a typical case) is provided on an end of the second arm 6. An end effector (a load) of various kind according to an application is mounted on the wrist 7. As shown in FIG. 1b, a second axis is driven by a motor 8, and a third axis is driven by a motor 9. Motors for other axes are not illustrated.

In the robot with the above general axial arrangement, the first arm 4 turns in the direction indicated by an arrow A to take a substantially horizontal posture, a heavy load is exerted particularly on the second axis due to gravity on the first arm 4 and the more distal components. FIG. 1b shows a case in which a rotary balancer BL is incorporated in the second axis mechanism 3 for driving the first arm 4. Alternatively, the rotary balancer BL may be incorporated in the different axis (e.g., a third axis for driving the second arm 6), as a matter of course. Otherwise, the rotary balancer may be incorporated in a plurality of axes (e.g., second and third axes) depending on the case.

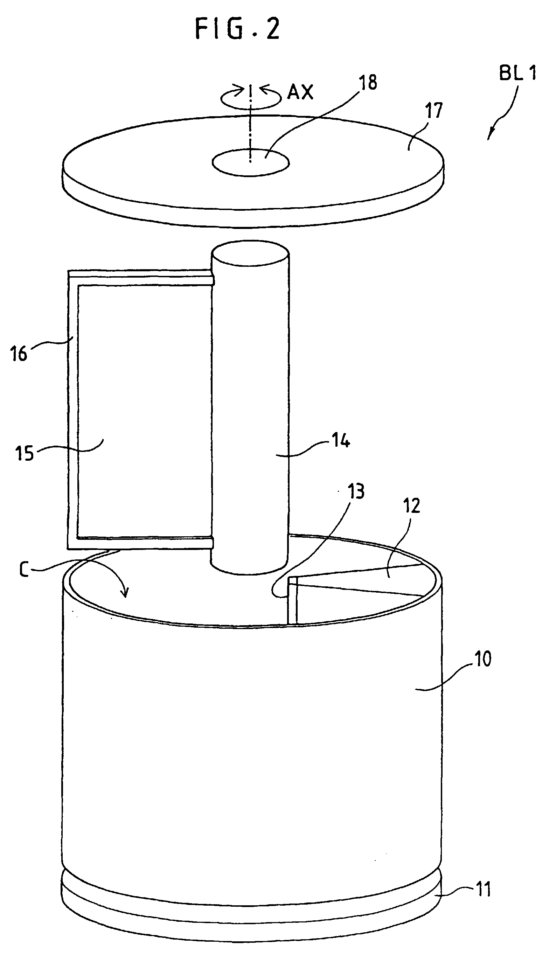

Several embodiments of the rotary balancer BL will be described referring to FIG. 2 and the subsequent figures.

FIG. 2 is an exploded view of components for showing a basic structure of a rotary balancer according to a first embodiment. As shown in FIG. 2, a rotary balancer denoted by BL1 comprises a housing 10 in the form of a cylinder with a cavity C, and a pair of end plates 11 and 17 to close the housing at the opposite ends. A part of the cylinder is occupied with a sectorial prism-shaped block 12 provided with a seal 13 along an edge of the block. An opening 18 to pass a shaft 14 is provided at a center of one end plate 17 coaxially with an axis AX of the cylinder, and the shaft 14 is coupled to the first arm 4 (See FIG. 1) through the opening 18, as will be described later.

A vane 15 is mounted on the side of the shaft 14. The vane 15 is a member for dividing the cavity C (excluding a portion occupied with the shaft 14, and this is also applied in the following embodiments) into two sealed or gastight regions around the shaft 14 in cooperation with the block 12, and a seal 16 is provided along the edge of the vane 15. In assembling the rotary balancer BL1, the housing 10 is closed with the end plate 17 after the shaft 14 with the vane 15 is placed in the cavity C. As described above, the shaft 14 extends to the outside of the housing through the opening 18. Further, although not shown, an end of the shaft 14 placed in the housing 10 is rotatably supported by a bearing mechanism provided at the center of the end plate 11.

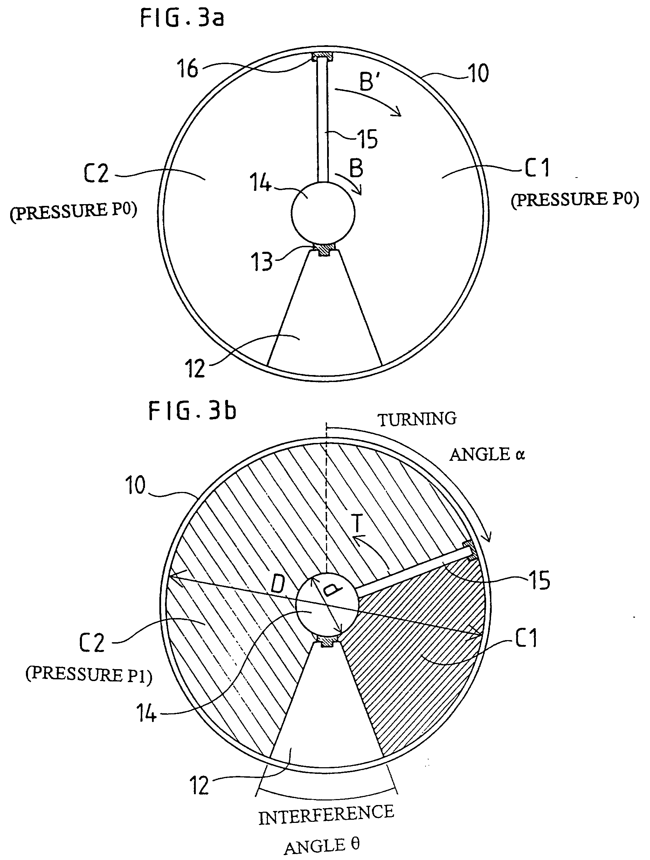

When the rotary balancer BL1 operates, the shaft 14 is turned with the vane 15 in response to a change in posture of the robot. Accordingly, as shown in FIGS. 3a and 3b, the pneumatic pressure is increased in one region C1 of two sealed or gaslight regions C1 and C2, while the pneumatic pressure is reduced in the other region C2. A difference in pressure between two gastight regions C1 and C2 is transduced through the vane 15 into a torque for turning the shaft 14 in the direction indicated by an arrow, and this torque is utilized as balancing force

FIG. 3a shows a neutral state of the rotary balancer BL1, and the regions C1 and C2 are equal in pressure to each other. This pressure in the neutral state is represented by P0. An atmospheric pressure is typically adopted as the pressure in neutral state, or alternatively, a pressure different from the atmospheric pressure is available. In general, using a high pressure as the pressure in neutral provides a powerful rotary balancer of a small size. It is a usual way that the neutral state of the rotary balancer BL1 corresponds to a posture in which the minimum gravitational load is exerted. This is applied to other embodiments described later.

On the condition that the shaft 14 is coupled to the first arm 4 so that the shaft 14 and the vane 15 are rotated in the directions indicated by arrows B and B' when the first arm 4 of the robot shown in FIG. 1 is turned in a horizontal direction (indicated by a arrow A) from the posture in which the minimum gravitational load is exerted, the shaft 14 and the vane 15 are turned to the state shown in FIG. 3b as the result of turning by a turning angle $\alpha$.

Assuming that the pressures in the gastight regions C1 and C2 in this state are represented by P1 and P2 respectively, the inequality of P1 > P0 > P2 is found as a matter of course, resulting in a breakage of the neutral state of the rotary balancer BL1. At this time, the torque (indicated by a arrow T) produced by the difference in pressure between the regions C1 and C2 is expressed by the following equation (1).

$$M = \frac{1}{8}\ell(D^2-d^2)\times P_0(\pi-\frac{\theta}{2})\times\frac{2\alpha}{\left(\pi-\frac{\theta}{2}\right)^2-\alpha^2} \qquad (1)$$

where respective symbols represent as follows;

M: output torque of the rotary balancer
$\alpha$: turning angle of the shaft 14 and the vane 15 measured from a neutral position
$\theta$: angular range (interference angle) occupied by the block 12
D: cylinder bore
$\ell$: cylinder length
d: diameter of the shaft 14

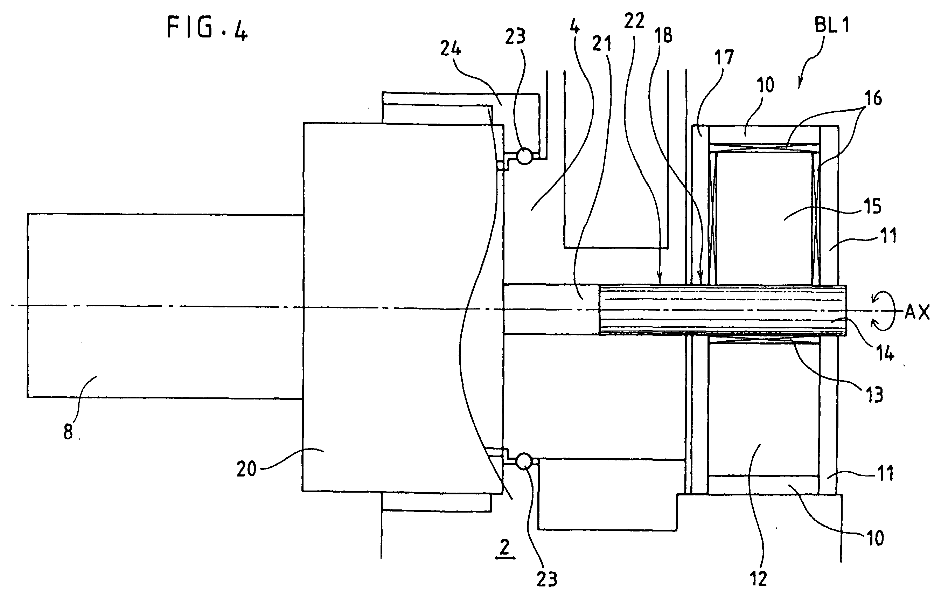

FIG. 4 is a partially cutaway sectional view showing a structure in which the rotary balancer BL1 employing the basic structure shown in FIG. 2 is incorporated into the second axis mechanism of the robot shown in FIG. 1. As shown in FIG. 4, a second axis drive motor 8 and a reduction gear 20 are mounted on a second axis mounting base 2 coaxially with the rotary balancer BL1. Inside the mechanism although not shown, an output shaft of the second axis drive motor 8 serves as an input shaft of the reduction gear 20, and an output shaft of the reduction gear 20 is coupled to the first arm 4.

The second axis mounting base 2 has an annular mounting portion 24, and the reduction gear 20 and the first arm 4 are fitted into the mounting portion 24. While the reduction gear 20 is fixed to the mounting portion 24, the first arm 4 is supported rotatably around the axis AX by a bearing mechanism 23. The first arm 4 has a cylindrical cavity 21 provided coaxially with the rotary balancer BL1.

The rotary balancer BL1 shown on the most righthand side in FIG. 4 is mounted on the second axis mounting base 2 by fixing the housing 10 of the rotary balancer to the second axis mounting base 2. While the opposite ends of the housing 10 are closed by the end plates 11 and 17, the shaft 14 serving as the output shaft of the rotary balancer BL1 extends to the inside of the cavity 21 of the first arm 4 through the end plate 17. Then, the shaft 14 is coupled to the first arm 4 by an appropriate coupling mechanism (e.g., spline coupling, key coupling) provided on the inner periphery of the cavity 21 of the first arm 4. In this manner, the rotary balancer BL1 in the first embodiment is coupled to the first arm which is driven by the output shaft of the reduction gear 20.

As described above, the vane 15 is attached to the side of the shaft 14 and divides the cavity in the cylinder in cooperation with the block 12 into two gastight regions around the shaft. The seals 13 and 16 are provided along the top edge of the block 12 and the edge of the vane 15, as described.

When the motor 8 rotates from the neutral state shown in FIG. 3a to turn the first arm 4 through the reduction gear 20, the shaft 14 and the vane 15 are rotated. Then, a torque resisting the rotational displacement of the vane 15 is produced corresponding to a turning angle $\alpha$ of the vane 15, as described, and is transmitted to a rotary axis of the first arm 4. The produced torque as the balancing force acts on the rotary axis portion of the first arm 4 and does not cause a deflection of the first arm 4. As described, the robot arm is disposed between its driving section (motor and reduction gear) and the rotary balancer in this embodiment, and the rotary balancer operates (the shaft and the vane are turned) passively in response to turning of the robot arm.

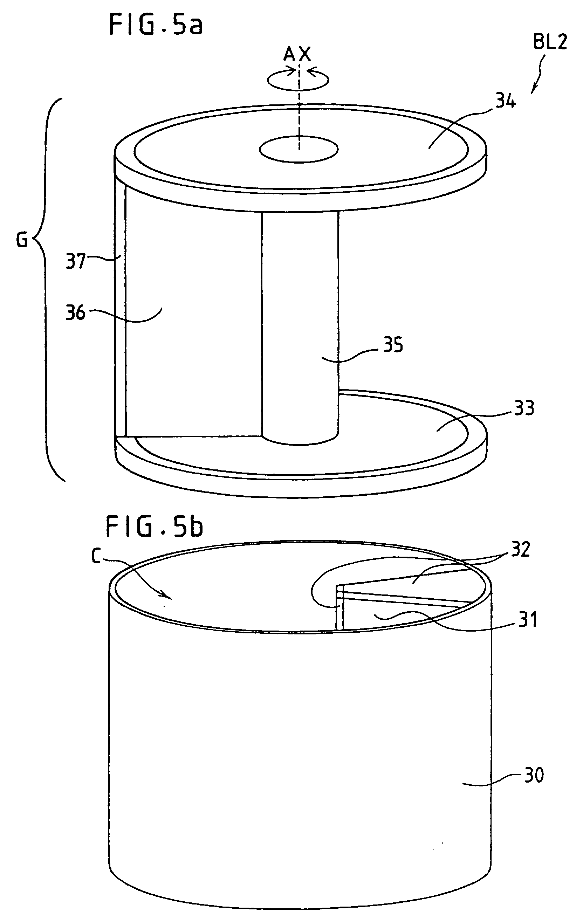

A structure different from that shown in FIG. 2 may be employed as a basic structure of the rotary balancer. For instance, FIG. 5 is an exploded view of components showing the basic structure of a rotary balancer according to a second embodiment. As shown in FIG. 5, a rotary balancer denoted by BL2 comprises a housing 30 in the form of a cylinder having a cavity C therein. A part of the cavity C is occupied with a sectorial prism-shaped block 31 with a seal 32 along a edge and a top surface of the block.

The rotary balancer BL2 of the second embodiment has a structure in which a unit G formed by connecting a pair of flanges 33 and 34 with a shaft 35 and a vane 36 is combined with the housing 30. The vane 36 is provided with a seal 37. In assembling the rotary balancer BL2, as is apparent from the shape of the unit G, the unit G with at least one of the flanges 33 and 34 unattached is placed in the housing 30. Then, the unattached flange 33 and/or 34 is fixed to the shaft 35 and the vane 36, to complete the unit G and also be combined with the housing 30.

Similarly to the first embodiment, the vane 36 serves as a member for dividing the cavity C into two gastight regions around the shaft 35 in cooperation with the block 31. When the rotary balancer BL2 operates, the flanges 33 and 34 with the shaft 35 and the vane 36 are rotated in response to a change of posture of the robot. Accordingly, a pressure difference is made between two regions formed by dividing the cavity C gastightly by the vane 36, a torque is produced through the vane 36 so as to turn the shaft 35 and the flanges 33 and 34. This torque is utilized as balancing force. A torque producing mechanism is equivalent to that in the first embodiment as described referring to FIGS. 3a and 3b, and therefore, the repetitive description thereof is omitted.

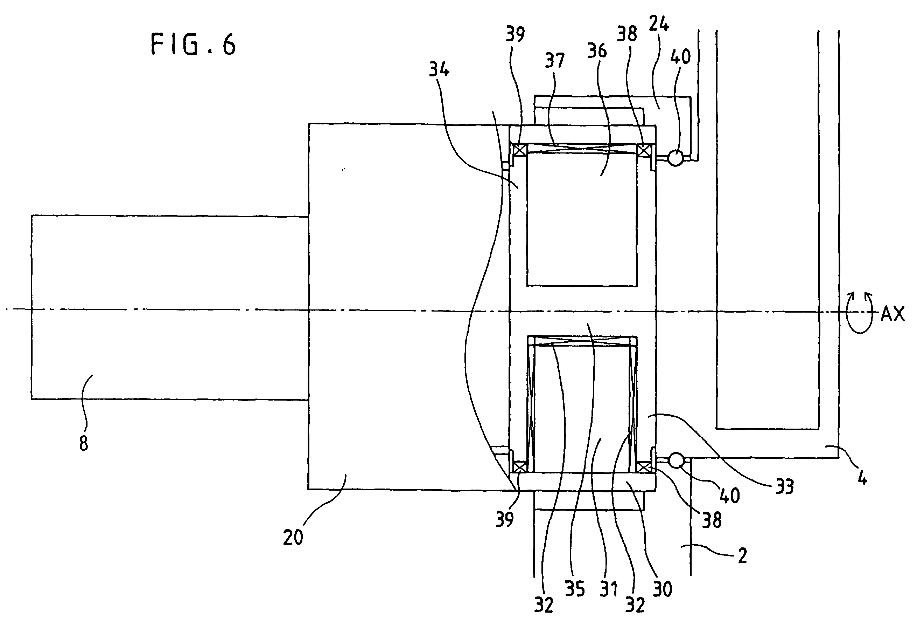

FIG. 6 is a partially cutaway sectional view showing a structure in which the rotary balancer BL2 employing the basic structure shown in FIG. 5 is incorporated into the second axis mechanism of the robot shown in FIG. 1. As shown in FIG. 6, a second axis drive motor 8 and a reduction gear 20 are mounted on a second axis mounting base 2 coaxially with the rotary balancer BL2. Inside the mechanism although not shown, an output shaft of the second axis drive motor 8 serves as an input shaft of the reduction gear 20, and an output shaft of the reduction gear 20 is connected to one flange 33 of the rotary balancer BL.

The second axis mounting base 2 has an annular mounting portion 24, and a part of the first arm 4 and the rotary balancer BL2 are inserted into the mounting portion 24. While the housing 30 of the rotary balancer BL2 is fixed to the mounting portion 24, the first arm 4 is supported rotatably around the axis AX by a bearing mechanism 40. On the other hand, the first arm 4 is coupled to the other flange 33 of the rotary balancer BL2.

As described, a vane 36 is fixed to the shaft 35 and divides the cavity in the cylinder into two gastight regions in cooperation with a block 31. Further, the seal 32 is provided on the opposite surfaces and the edge of the block 31 and the seal 37 is provided on the edge of the vane 36. Seals 38 and 39 are also provided on the peripheral edges of the flanges 33 and 34, respectively.

Thus, the rotary balancer BL2 of the second embodiment functions as a transmission mechanism provided between the reduction gear 20 and the first arm, differently from the first embodiment. That is, since both the flanges 33 and 34, the shaft 35 and the vane 36 are provided as an integrally rotating unit G (See FIG. 5) between the reduction gear 20 and the first arm, a output torque of the reduction gear 20 received by the flange 34 is transmitted to the first arm 4 through the rotary balancer BL2.

When the motor 8 rotates from the neutral state shown in FIG. 3a, the rotation is transmitted to the stage 34 of the rotary balancer BL2 through the reduction gear 20, and the shaft 35, the vane 36 and the flange 33 beside the first arm 4 are rotated. Accordingly, the first arm 4 is turned, and at the same tune the torque is produced corresponding to a turning angle of the vane 36, as described.

This torque acts on the rotary axis of the first arm 4 and the output shaft of the reduction gear 20 as a balancing force acting in a direction so as to neutralize a moment caused by the gravity exerted on the first arm 4. In other words, the gravitational load on the rotary axis of the first arm 4 is born by the resultant force of output torque of the reduction gear 20 and output torque (balancing force) of the rotary balancer BL2. Accordingly, there is not a possibility that the balancing force produced by the rotary balancer BL2 causes a deflection of the first arm 4 also in this second embodiment.

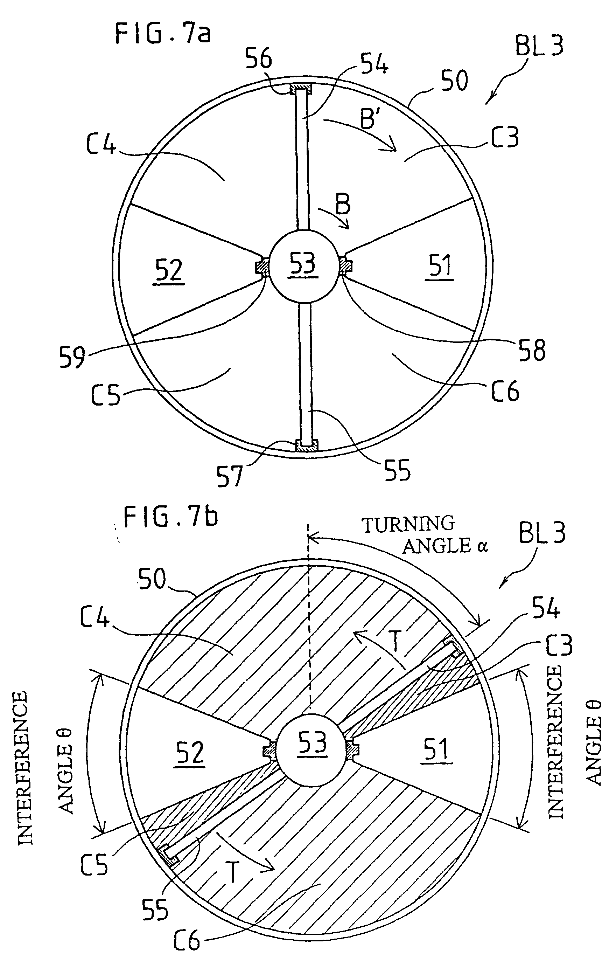

While each of the rotary balancers BL1 and BL2 in the first and second embodiments described above employs the single movable partition member (the vane 15 or 35) together with the single stationary partition member (the block 12 or 31) to divide the cylinder (cavity) into regions gastightly, a plurality of movable partition members or stationary partition members may be used. FIG. 7 is a diagram for showing a structure and a operation of a rotary balancer BL3 having two movable partition members and two stationary partition members in a style similar to that of FIG. 3.

As shown in FIGS. 7a and 7b, the rotary balancer BL3 has a structure in which two blocks 51 and 52 are arranged in a housing 50 in the form of cylinder having a cavity therein, and two vanes 54 and 55 are attached to a shaft 53 disposed along a cylinder axis. Two gastight cavities formed by the blocks 51 and 52 are further divided into regions C3 and C4 and regions C5 and C6 by the vanes 54 and 55.

Seals 56 to 59 are provided along the edges of the blocks 51 and 52 and the vanes 54 and 55 so as to hold these four regions sealed. When the rotary balancer BL3 operates, the shaft 53 with two vanes 54 and 55 is turned in response to a change of posture of the robot. Consequently, a difference in pressure is made between two gastight regions C3 and C4 and between two gastight regions C5 and C6. This pressure difference is transduced through the vanes 54 and 55 into a torque to turn the shaft 53, and this torque is utilized as a balancing force.

FIG. 7a shows a neutral state of the rotary balancer BL3 similar to that shown in FIG. 3a, and pressures in regions C3 to C6 are all equal (the neutral state is established if pressures in C3 and C4 and pressures in C5 and C6 are respectively equal to each other in principle). This pressure in the neutral state is represented by P0 in the same manner as in the case of FIG. 3. As described, an atmospheric pressure is typically adopted to the pressure in the neutral state, or alternatively, a pressure different from the atmospheric pressure is available. Further, using a high pressure as the pressure in the neutral state provides a powerful rotary balancer of a small size

When the first arm 4 is turned in a horizontal direction (indicated by an arrow A) from the posture in which the minimum gravitational load is exerted on condition that the rotary balancer BL3 of this embodiment is incorporated into the second axis mechanism 3 of the robot shown in FIG. 1, the shaft 53 and the vanes 54 and 55 are rotated in the directions indicated by arrows B and B'. Then, the shaft 53 and the vanes 54 and 55 are changed from the neutral state shown in FIG. 7a to the state shown in FIG. 7b as the result of turning by a turning angle .

Assuming that pressures in the gastight regions C3, C4, C5 and C6 on this occasion are represented respectively by P3, P4, P5 and P6, the inequality of P1 > P0 > P2 and that of P5 > P0 > P6 are found as a matter of course, resulting in a breakage of the neutral state of the rotary balancer BL3. At this time, the torque (indicated by an arrow T) produced by the pressure difference between the regions C3 and C4 and between the regions C5 and C6 is expressed by the following equation (2).

$$M = \frac{1}{4}\ell(D^2 - d^2) \times P_0(\pi - \frac{\theta}{2}) \times \frac{4\alpha}{(\pi - \theta)^2 - 4\alpha^2} \qquad (2)$$

where each symbol is corresponding to those used in the above equation (1) and represents as follows.

M: output torque of the rotary balancer
$\alpha$: turning angle of the shaft 53 and the vanes 54 and 55 when measured from the neutral position
$\theta$: angular range (angle of interference) occupied by the blocks 51 and 52
D: cylinder bore
$\ell$: cylinder length
d: diameter of the shaft 53

It is apparent that the structure corresponding to the first or second embodiment described referring to FIG. 2 or 5 may be applied as a basic structure to the rotary balancer BL3 according to the third embodiment (two vanes and two blocks are used), and therefore its detailed description will be omitted. Further, the rotary balancer adopting the basic structure corresponding to the first embodiment can be incorporated into the robot having the structure shown in FIG. 4, while the rotary balancer adopting the basic structure corresponding to the second embodiment can be incorporated into the robot having the structure shown in FIG. 6.

Each of the rotary balancers BL1 to BL3 in the above embodiments makes use of the vane, the block and the cylinder inner wall directly in order to form a plurality of gastight regions. That is, gas in the gastight regions is in direct contact with the wall surfaces of these members, and the seal is provided along each easily gas-leaking portion to prevent from gas leakage. However, it is not easy to prevent from the leakage perfectly with the seals, and the rotary balancer is apt to reduce the period available without replenishment of gas.

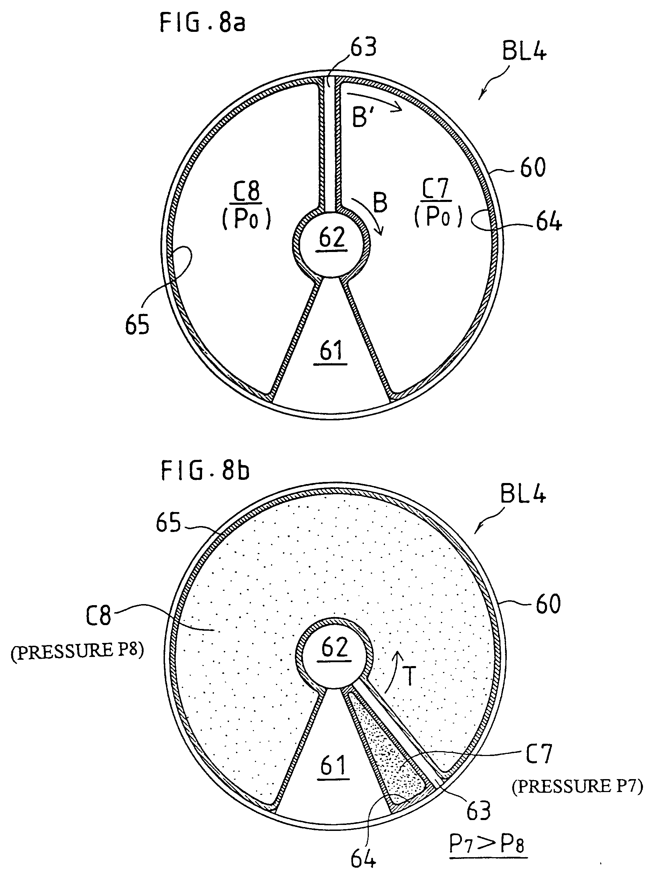

In view of the above, a structure and an operation of an improved rotary balancer to overcome the above problem will be described according to a fourth embodiment referring to FIG. 8 which is a sectional view of the rotary balancer in a style similar to that of FIG. 7. As shown in FIGS. 8a and 8b, a rotary balancer BL4 of the fourth embodiment is characterized in that gas bags are used to form two gastight regions.

The rotary balancer BL4 has a structure in which a block 61 is disposed in a housing in the form of a cylinder having a cavity therein, and a vane 63 is mounted on a shaft 62 arranged along on a cylinder axis. Similarly to the embodiments described above, the vane 63 is arranged so as to divide the cavity in the cylinder in cooperation with the block 62 into two regions. Then, bags 64 and 65 are respectively charged with gas and arranged in these two regions, and two gastight regions C7 and C8 are formed by these bags 64 and 65. Thus, there is no need of providing a seal on the edges of the block 61 and the vane 63.

A deformable material having gastightness such as rubber is suitably selected as the material of the bags 64 and 65. Incidentally, for convenience' sake of illustration, the thickness of each of the bags 64 and 65 is exaggerated and indicated by hatching.

When the rotary balancer BL4 operates, the shaft 62, accordingly, the vane 63 is turned in response to a change of posture of the robot. Consequently, a pressure difference is made between the gastight regions C7 and C8. This pressure difference is transduced through the vane 63 into a torque to turn the shaft 62, and this torque is utilized as a balancing force.

Similarly to FIGS. 3a and 7a, FIG. 8a shows a neutral state of the rotary balancer BL4, and pressures of the regions C7 and C8 are equal to each other. This pressure in the neutral state is represented by P0 in the same manner as in the above embodiments. The fourth embodiment is similar to the above embodiments in that an atmospheric pressure is typically adopted as the pressure in the neutral state, or alternatively, a pressure different from the atmospheric pressure is available, and using a high pressure as the pressure in the neutral state provides a powerful rotary balancer of a small size.

When the first arm 4 is turned in a horizontal direction (indicated by an arrow A) from the posture in which the minimum gravitational load is exerted on condition that the rotary balancer BL4 of the fourth embodiment is incorporated into the second axis mechanism 3 of the robot shown in FIG. 1, the shaft 62 and the vane 63 are rotated in the directions indicated by arrows B and B'. Then, the shaft 62 and the vane 63 are changed from the neutral state shown in FIG. 8a to the state shown in FIG. 8b.

Assuming that pressures in the gastight regions C7 and C8 in this state are represented respectively by P7 and P8, the inequality of P7 > P0 > P8 is found as a matter of course, and in this case, a breakage of the neutral state of the rotary balancer BL4 occurs and a torque (indicated by an arrow T) to push back the vane 63 from the high pressure side to the low pressure side is produced. The magnitude of the produced torque is equivalent basically to that calculated by the equation (1) described in the first embodiment.

While the fourth embodiment employs two bags as the gastight region forming means so as to form two gastight regions, the gaslight region may increase in number with more bags. For instance, the third embodiment shown in FIG. 7 may be modified to use four bags.

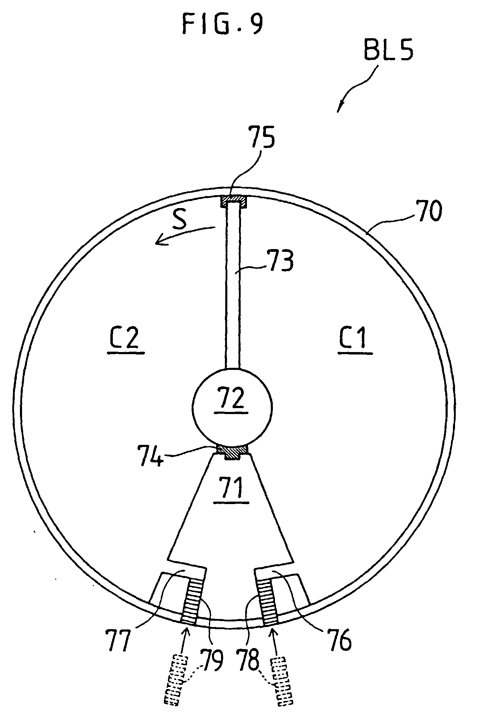

In addition to the embodiments of the rotary balancers BL1 to BL4 having the characteristics of the present invention, a description will be finally given of a aspect that the principal components of each of the rotary balancers are provided by using a simply modified body of a rotary fluid pressure actuator available on the market. FIG. 9 is a view showing an embodiment (a fifth embodiment) in which a rotary balancer equivalent in structure to that in the first embodiment is constructed by modifying a body of the rotary fluid pressure actuator.

A rotary balancer BL5 shown in FIG. 9 is characterized in that the body of the rotary fluid pressure actuator is utilized as a cylinder element having a cavity therein.

Thus, in FIG. 9, the body of the rotary fluid pressure actuator available on the market is utilized as a housing 70 in the form of a cylinder and also other elements inside the cylinder, such as a block 71, a shaft 72, a vane 73 and seals 74 and 75. As shown in FIG. 9, the block 71 has air intake/exhaust ports 76 and 77 communicating respectively to two gastight regions C1 and C2 formed by dividing the cavity by the vane 73.

These air intake/exhaust ports 76 and 77 function to supply air to one region and to exhaust air from the other in case of using the structure as the body of the rotary fluid pressure actuator. For instance, when high pressure air is supplied through the port 76 and air is exhausted through the port 77, a torque to turn the vane 73 in the direction indicated by an arrow S is produced. Accordingly, the shaft 72 is provided to function as an output shaft of the rotary fluid pressure actuator.

This structure is equivalent to that of the rotary balancer employing the single vane, as described, except that the air intake and exhaust ports 76 and 77 are provided in the block 71. As shown by the broken and solid lines, when these air intake/exhaust ports 76 and 77 are closed up with closing members 78 and 79, this rotary fluid pressure actuator may be used as a rotary balancer employing the single vane.

Similarly, it is apparent that if the air intake and exhaust ports in the body of a rotary fluid pressure actuator of a type having two or more vanes (movable airtight partition members) are closed, the rotary fluid pressure actuator can be used as the principal components of the rotary balancer.

Since thread grooves are usually provided on inner surfaces of the air intake/exhaust ports 76 and 77 of the rotary fluid pressure actuator so as to connect directly or indirectly these ports to air supply and exhaust pipes, screws to be fitted to the thread grooves may be used for the closing these ports. Alternatively, other closing methods (for instance, welding or closing with a hardening compound) may be available at need.

According to the present invention, the rotary balancer with a simple structure is incorporated into the rotary axis mechanism of a robot and thus a load on a rotary axis driving motor can be reduced while maintaining a compact external shape of the robot. Further, according to the present invention, since a deflecting phenomenon caused by an action of a balancing force exerted on a robot arm is avoided, the control accuracy of the robot employing the balancer can be prevented from lowering. Furthermore, by utilizing a simply modified body of a fluid pressure rotary actuator as components of the rotary balancer, the rotary balancer can be manufactured more simply at lower cost as an equipment for the robot.

**Claims**

1. A rotary balancer to be incorporated into a rotary axis mechanism of a robot, comprising:

   a cylinder;
   a shaft rotatably disposed along an axis of said cylinder;
   at least one stationary partition member fixed to a inner surface of said cylinder so as to occupy a part of a space formed between a inner surface of said cylinder and a outer surface of said shaft;
   at least one movable partition member fixed to said shaft to rotate with said shaft as a unit so as to occupy a part of the space between the inner surface of said cylinder and the outer surface of said shaft; and
   closing members for closing the opposite end openings of said cylinder;

wherein the space around said shaft in said cylinder is divided into at least two regions by said stationary partition member, said movable partition member and said closing members, and a sealed space is formed in each of said regions.

2. A rotary balancer according to claim 1, wherein said stationary partition member is provided with a seal member for sealing a gap between said stationary partition member and said shaft, and said movable partition member is provided with a seal member for sealing a gap between said movable partition member and said cylinder, thereby said sealed space is formed in each partitioned region.

3. A rotary balancer according to claim 1, wherein a bag charged with gas is provided in each partitioned region, thereby said sealed space is formed in each partitioned region.

4. A rotary balancer according to claims 1 to 3, wherein a fluid pressure actuator having air intake/exhaust ports is utilized for the rotary balancer by closing said air intake/exhaust ports, and components of said fluid pressure actuator are used as said cylinder, said shaft, said at least one stationary partition member, said at least one movable partition member and said closing members.

5. A robot having a rotary balancer incorporated into a rotary axis driving mechanism for driving a robot arm, comprising:

said rotary balancer including a cylinder, a shaft rotatably disposed along an axis of said cylinder, at least one stationary partition member fixed to an inner surface of said cylinder so as to occupy a part of a space formed between an inner surface of said cylinder and a outer surface of said shaft, at least one movable partition member fixed to said shaft to rotate with said shaft as a unit so as to occupy a part of the space between the inner surface of said cylinder and the outer surface of said shaft, and closing members for closing the opposite end openings of said cylinder;

wherein the space around said shaft in said cylinder is divided into at least two regions by said stationary partition member, said movable partition member and said closing members, and a sealed space is formed in each of said regions.

6. A robot according to claim 5, wherein said rotary axis mechanism includes a driving source, said robot arm is disposed between said driving source and said rotary balancer, and said shaft of said rotary balancer is connected to said robot arm to rotate in response to turning of said robot arm.

7. A robot according to claim 5, wherein said rotary axis driving mechanism includes a driving source, said rotary balancer is disposed between said robot arm and said driving source, and a driving force from said driving source is transmitted to said robot arm through said rotary balancer.

8. A rotary balancer according to any one of claims 5 to 7, wherein said stationary partition member is provided with a seal member for sealing a gap between said stationary partition member and said shaft, and said movable partition member is provided with a seal member for sealing a gap between said movable partition member and said cylinder, thereby said sealed space is formed in each partitioned region.

9. A robot according to any one of claims 5 to 7, wherein a bag charged with gas is provided in each partitioned region, thereby said sealed space is formed in each partitioned region.

10. A robot according to any one of claims 5 to 7, wherein a fluid pressure actuator having air intake/exhaust ports is utilized for the rotary balancer by closing said air intake/exhaust ports, and components of said fluid pressure actuator are used as said cylinder, said shaft, said at least one stationary partition member, said at least one movable partition member and said closing members.

FIG.1a

FIG.1b

EP 0 901 888 A1

FIG.2

FIG.3a

16    B'    10

15

C2    14    B    C1

(PRESSURE P0)    13    (PRESSURE P0)

12

FIG.3b

TURNING

ANGLE α

10    T

D    d    15

C2    C1

(PRESSURE P1)

14

12

INTERFERENCE

ANGLE θ

11

FIG.4

EP 0 901 888 A1

FIG.5a

FIG.5b

FIG.6

EP 0 901 888 A1

FIG.7a

FIG.7b

FIG.8a

FIG.8b

FIG.9

## INTERNATIONAL SEARCH REPORT

| | International application No. |
| --- | --- |
| | PCT/JP98/00019 |

### A. CLASSIFICATION OF SUBJECT MATTER
Int.Cl⁶ B25J19/00

According to International Patent Classification (IPC) or to both national classification and IPC

### B. FIELDS SEARCHED

Minimum documentation searched (classification system followed by classification symbols)
Int.Cl⁶ B25J19/00, 17/00

Documentation searched other than minimum documentation to the extent that such documents are included in the fields searched
Jitsuyo Shinan Koho              1926-1998
Kokai Jitsuyo Shinan Koho    1971-1998

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP, 8-66889, A (Yugen Kaisha Toransapoto),<br>March 12, 1996 (12. 03. 96),<br>Fig. 8 (Family: none) | 1, 3, 5, 9<br>2, 4, 6-8,<br>10 |
| Y | JP, 3-55193, A (Tokico, Ltd.),<br>March 8, 1991 (08. 03. 91)  (Family: none) | 2, 7, 8 |
| Y | JP, 61-50689, U (Toyota Motor Corp.),<br>April 5, 1986 (05. 04. 86),<br>Fig. 6 (Family: none) | 4, 10 |
| Y | JP, 60-255382, A (Daifuku Co., Ltd.),<br>December 17, 1985 (17. 12. 85),<br>Fig. 2 (Family: none) | 6 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| April 2, 1998 (02. 04. 98) | April 14, 1998 (14. 04. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

18